# EUROPEAN PATENT APPLICATION

(11) **EP 4 790 566 A1**
(43) Date of publication of application: **12.08.2026**
(21) Application number: 24878842.4
(22) Date of filing: 30.09.2024
(51) Int. Cl.: G06F 16/2453

(54) **DATA PROCESSING METHOD AND RELATED APPARATUS**

(30) Priority: 20.10.2023 CN 202311368188; 18.01.2024 CN 202410077175
(71) Applicant: Huawei Cloud Computing Technologies Co., Ltd., Gui'an New District, Guizhou 550025 (CN)
(72) Inventor: JI, Xianghu, Guiyang, Guizhou 550025 (CN); FU, Xudong, Guiyang, Guizhou 550025 (CN); ZHU, Guanyu, Guiyang, Guizhou 550025 (CN); PENG, Lixun, Guiyang, Guizhou 550025 (CN)
(74) Representative: Maiwald GmbH
(86) International application number: PCT/CN2024/122616
(87) International publication number: WO 2025/082198

(57) **Abstract**

A data processing method is provided to ensure independence of processing resources between different users using a database. In the data processing method, a connection processing module is set to obtain a connection request of a user for a database system, and a thread group bound to the user is created for the user based on the connection request, so that each created thread group processes only a data operation request of a specific user, thereby ensuring independence of processing resources between different users and avoiding mutual interference between different users. In addition, a load detection module of the database system can detect a load status of a created thread group, so as to delete some thread groups that have no load for long time, thereby avoiding excessive idle thread groups caused by binding thread groups to the user, and ensuring high resource utilization of the database system.

## Description

This application claims priorities to Chinese Patent Application No. 202311368188.0, filed with the China National Intellectual Property Administration on October 20, 2023 and entitled "REQUEST PROCESSING METHOD AND APPARATUS, AND COMPUTE DEVICE CLUSTER", and to Chinese Patent Application No. 202410077175.6, filed with the China National Intellectual Property Administration on January 18, 2024 and entitled "DATA PROCESSING METHOD AND RELATED APPARATUS", which are incorporated herein by reference in their entireties.

### TECHNICAL FIELD

This application relates to the field of database technologies, and in particular, to a data processing method and a related apparatus.

### BACKGROUND

A database system is a system including a database and management software of the database, can process various data operation requests sent by a user for the database, and can return data operation results to the user. In a business scenario, the database system is generally provided to the user in a rental manner. That is, the user becomes a tenant of the database system through leasing, and has permission to operate the database system during a lease period.

A conventional database system usually serves only a single tenant, which easily leads to idle resources and resource waste. In view of this, current database systems tend to support multi-tenant sharing, allowing the plurality of tenants to access a same database system, thereby improving resource utilization and reducing costs of database system providers.

In a multi-tenant shared database system, a thread pool including a plurality of worker threads is usually constructed to centrally process data query requests sent by different tenants. However, when the data query requests of different tenants are centrally processed based on one thread pool, resource contention is likely to occur between different tenants. In other words, data query performance of one tenant may be disturbed by another tenant, causing performance instability.

### SUMMARY

This application provides a data processing method, to ensure independence of processing resources between different users, and avoid mutual interference between different users.

A first aspect of this application provides a data processing method, applied to a database system. The data processing method includes: A connection processing module of the database system receives a first connection request, where the first connection request carries first user identity information of a first user. That is, the first connection request is initiated by the first user, and the first connection request is used to request to establish a connection to the database system.

Then, the connection processing module creates a first thread group for the first user based on the first user identity information of the first user. The first thread group is bound to the first user, the first thread group includes at least one worker thread, and the first thread group is used to process a data operation request corresponding to the first user. That is, a binding relationship is established between the first thread group and the first user, so that the at least one worker thread in the first thread group is used to process the data operation request from the first user, and does not process a data operation request from another user.

Then, the connection processing module receives a second connection request, where the second connection request carries second user identity information of a second user. The connection processing module creates a second thread group for the second user based on the second user identity information of the second user. The second thread group is bound to the second user, the second thread group includes at least one worker thread, and the second thread group is used to process a data operation request corresponding to the second user. That is, all worker threads in the second thread group are used to process the data operation request from the second user, and do not process a data operation request of another user.

In addition, a load detection module of the database system detects a load status of the first thread group and a load status of the second thread group. If detecting that duration in which a target thread group has no load exceeds target duration, the load detection module deletes the target thread group, where the target thread group is the first thread group or the second thread group. In other words, if duration in which one thread group remains without load exceeds the target duration, it indicates that a user corresponding to the thread group does not access a database for long time. In this case, the load detection module deletes the thread group, to release a resource occupied by the thread group, so as to ensure high resource utilization of the database system.

In this solution, a connection processing module is set to obtain a connection request of a user for a database system, and a thread group bound to the user is created for the user based on the connection request, so that each created thread group processes only a data operation request of a specific user, thereby ensuring independence of processing resources between different users and avoiding mutual interference between different users. In addition, a load detection module of the database system can detect a load status of a created thread group, so as to delete some thread groups that have no load for long time, thereby avoiding excessive idle thread groups caused by binding thread groups to the user, and ensuring high resource utilization of the database system.

In a possible implementation, when the connection processing module receives the first connection request, no thread group bound to the first user exists in the database system. In other words, when no thread group bound to a user exists in the database system, upon obtaining a connection request of the user, the connection processing module automatically triggers creation of a corresponding thread group for the user, thereby improving efficiency of subsequently responding to a data operation request of the user.

In a possible implementation, the connection processing module receives a third connection request, where the third connection request carries the first user identity information, and the connection processing module establishes a binding relationship between a new connection established based on the third connection request and the first thread group, for the first thread group to process a data operation request from the new connection.

In other words, for different connections established based on a same user identity, the different connections may be bound to a same thread group, so that the same thread group can process data operation requests from different connections of a same user, thereby avoiding creation of excessive thread groups and reducing resources occupied by the thread groups. This effectively improves resource utilization of the database system.

In a possible implementation, when detecting that average load of a thread group bound to the first user is greater than a first threshold, the load detection module creates a new thread group bound to the first user.

That is, if average load of one or more thread groups that are currently bound to the first user is high, the load detection module is responsible for creating a new thread group bound to the first user, to relieve processing pressure of the existing thread group and improve processing efficiency of the data operation request corresponding to the first user. This avoids waiting for excessively long time by the user when the user queries for data in the database.

In a possible implementation, when detecting that average load of thread groups bound to the first user is less than a second threshold and a quantity of the thread groups bound to the first user is greater than 1, the load detection module deletes a part of the thread groups corresponding to the first user.

In other words, if a user corresponds to a plurality of thread groups, and average load of the plurality of thread groups is not high, it indicates that a data operation request of the user does not need to be processed by excessive thread groups. Therefore, one thread group corresponding to the user may be deleted, to allocate load originally borne by the deleted thread group to other thread groups, thereby improving thread group utilization.

In a possible implementation, the average load of the thread group is determined based on any one or more of a plurality of load indicators, and the plurality of load indicators include a quantity of to-be-processed data operation requests in a thread group, a quantity of active worker threads in a thread group, and a size of a processing resource occupied by a thread group.

In a possible implementation, the load detection module creates a new worker thread or deletes a part of original worker threads in the first thread group based on the load status of the first thread group. For example, when average load of worker threads in the first thread group is high, the load detection module may create a new worker thread in the first thread group. For another example, when average load of worker threads in the first thread group is low, the load detection module may delete one or more worker threads from the first thread group. Moreover, in addition to the first thread group, the load detection module may also detect a load status of another thread group, and create a new worker thread or delete an original worker thread for the thread group based on the load status of the thread group.

In this solution, a load status of the worker thread in the thread group is detected by the load detection module, so as to add a new worker thread or delete a worker thread for the thread group. This can improve resource utilization of the thread group, ensure a quick response to a user request, and save memory resources and processing resources of the database system as much as possible.

In a possible implementation, a listener module of the database system obtains data operation requests from different users, and transfers the obtained data operation request to a corresponding thread group based on a user corresponding to the obtained data operation request. That is, the listener module is specifically configured to listen to the data operation request sent by the user, and allocate, based on the user corresponding to the data operation request and a binding relationship between the user and the thread group, the data operation request to the corresponding thread group for processing.

In other words, the listener module is actually configured to: listen to connections established between the database system and the users, so as to obtain the data operation requests from the different users; and then transfer, based on a user corresponding to each obtained data operation request, the data operation request to a thread group corresponding to the same user, so that each thread group processes a data operation request of a corresponding user. In addition, the listener module is independently disposed outside the thread group to listen to the data operation request, so that the listener module has no binding relationship with the user. In comparison with having a thread group implement data operation request listening, independently disposing the listener module outside the thread group can avoid separately disposing a dedicated listener thread in each thread group, thereby greatly reducing a quantity of threads in the thread group and reducing resource occupation.

In a possible implementation, the first thread group further includes a request queue, the request queue is used to store the data operation requests, and the at least one worker thread in the first thread group is used to obtain the data operation request from the request queue and process the obtained data operation request.

In a possible implementation, a processing resource occupied by the first thread group and a processing resource occupied by the second thread group are preconfigured. That is, in the created thread groups in the database system, a processing resource occupied by a thread group bound to a same user is preconfigured. For example, for each thread group bound to a user, a specific central processing unit (Central Processing Unit, CPU) resource may be preconfigured, so that different thread groups can occupy independent CPU resources. This ensures that CPU isolation can be implemented between different users using the database system, and ensures that each user can have stable database query performance.

In a possible implementation, both the connection processing module and the load detection module are implemented by using one or more threads.

A second aspect of this application provides a data processing apparatus. The apparatus is used in a database system, and the apparatus includes: a receiving module, configured to receive a first connection request, where the first connection request carries first user identity information of a first user; and a processing module, configured to create a first thread group for the first user based on the first user identity information of the first user, where the first thread group is bound to the first user, the first thread group includes at least one worker thread, and the first thread group is used to process a data operation request corresponding to the first user. The receiving module is further configured to receive a second connection request, where the second connection request carries second user identity information of a second user. The processing module is further configured to create a second thread group for the second user based on the second user identity information of the second user, where the second thread group is bound to the second user, the second thread group includes at least one worker thread, and the second thread group is used to process a data operation request corresponding to the second user. The processing module is further configured to detect a load status of the first thread group and a load status of the second thread group. If detecting that duration in which a target thread group has no load exceeds target duration, the processing module is further configured to delete the target thread group, where the target thread group is the first thread group or the second thread group.

In a possible implementation, when the receiving module receives the first connection request, no thread group bound to the first user exists in the database system.

In a possible implementation, the receiving module is further configured to receive a third connection request, where the third connection request carries the first user identity information; and the processing module is further configured to establish a binding relationship between a new connection established based on the third connection request and the first thread group, for the first thread group to process a data operation request from the new connection.

In a possible implementation, the processing module is further configured to: when detecting that average load of a thread group bound to the first user is greater than a first threshold, create a new thread group bound to the first user.

In a possible implementation, the processing module is further configured to: when detecting that average load of thread groups bound to the first user is less than a second threshold and a quantity of the thread groups bound to the first user is greater than 1, delete a part of the thread groups bound to the first user.

In a possible implementation, the average load is determined based on any one or more of a plurality of load indicators, and the plurality of load indicators include a quantity of to-be-processed data operation requests in a thread group, a quantity of active worker threads in a thread group, and a size of a processing resource occupied by a thread group.

In a possible implementation, the processing module is further configured to: create a new worker thread or delete a part of original worker threads in the first thread group based on the load status of the first thread group.

In a possible implementation, the processing module is further configured to: obtain data operation requests from different users, and transfer the obtained data operation request to a corresponding thread group based on a user corresponding to the obtained data operation request.

In a possible implementation, the first thread group further includes a request queue, the request queue is used to store the data operation requests, and the at least one worker thread in the first thread group is used to obtain the data operation request from the request queue and process the obtained data operation request.

In a possible implementation, a processing resource occupied by the first thread group and a processing resource occupied by the second thread group are preconfigured.

A third aspect of this application provides a compute device cluster, including at least one compute device, where each compute device includes a processor and a memory. The processor of the at least one compute device is configured to execute instructions stored in the memory of the at least one compute device, to enable the compute device cluster to perform the method according to any one of the first aspect or the implementations of the first aspect. For details of steps that are performed by the computer device cluster and that are in the possible implementations of the first aspect, refer to the first aspect. Details are not described herein again.

A fourth aspect of this application provides a computer-readable storage medium. The computer-readable storage medium stores a computer program, and when the computer program is run on a computer, the computer is enabled to perform the method according to any one of the implementations of the first aspect.

A fifth aspect of this application provides a circuit system. The circuit system includes a processing circuit. The processing circuit is configured to perform the method according to any one of the implementations of the first aspect.

A sixth aspect of this application provides a computer program product. When the computer program product runs on a computer, the computer is enabled to perform the method according to any one of the implementations of the first aspect.

A seventh aspect of this application provides a chip system. The chip system includes a processor, configured to support an electronic device in implementing a function in any one of the implementations of the first aspect. In a possible design, the chip system further includes a memory. The memory is configured to store program instructions and data that are necessary for the electronic device. The chip system may include a chip, or may include a chip and another discrete component.

For beneficial effects of the second aspect to the seventh aspect, refer to the descriptions of the first aspect. Details are not described herein again.

### BRIEF DESCRIPTION OF DRAWINGS

FIG. 1 is a diagram of a structure of a database system in a related technology;
FIG. 2 is a diagram of a structure of a database system according to an embodiment of this application;
FIG. 3 is a diagram of a structure of another database system according to an embodiment of this application;
FIG. 4a and FIG. 4b each are a diagram of a relationship between a user and a connection established to a database system according to an embodiment of this application;
FIG. 5a and FIG. 5b each are a diagram of a relationship between a user and a thread group in a database system according to an embodiment of this application;
FIG. 6 is a diagram of a structure of a thread group according to an embodiment of this application;
FIG. 7 is a diagram of a relationship between a user and a thread group in a database system according to an embodiment of this application;
FIG. 8 is a diagram of a working procedure of a database system according to an embodiment of this application;
FIG. 9 is a diagram of a correspondence between a connection and a listener thread according to an embodiment of this application;
FIG. 10 is a schematic flowchart of checking a thread group by a timer thread according to an embodiment of this application;
FIG. 11 is another schematic flowchart of checking a thread group by a timer thread according to an embodiment of this application;
FIG. 12 is a diagram of a structure of a data processing apparatus according to an embodiment of this application;
FIG. 13 is a diagram of a structure of a compute device 1300 according to an embodiment of this application;
FIG. 14 is a diagram of a structure of a compute device cluster according to an embodiment of this application;
FIG. 15 is a diagram of a structure of another compute device cluster according to an embodiment of this application; and
FIG. 16 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Division into the modules in this application is logical division. During implementation in an actual application, there may be another division manner. For example, a plurality of modules may be combined or integrated into another system, or some features may be ignored or not executed. In addition, the displayed or discussed mutual coupling or direct coupling or communication connection may be through some interfaces, and the indirect coupling or communication connection between modules may be in an electrical form or another similar form. This is not limited in this application. In addition, modules or submodules described as separate components may be or may not be physically separate, or may be or may not be physical modules, or may not be grouped into a plurality of circuit modules. Objectives of the solutions of this application may be achieved by selecting a part or all of the modules according to actual requirements.

For ease of understanding, the following describes some technical terms used in embodiments of this application.

### (1) Database

A database is a repository that organizes, stores, and manages data based on data structures. In essence, the database is a collection of a large amount of organized and shareable data stored in a computer for long time and managed in a unified manner.

### (2) Database system (Database System)

A database system is a system including a database and management software of the database. Specifically, the database system is an ideal data processing system developed to meet a data processing requirement, and is also a software system that provides data for an actually operable storage, maintenance, and application system, and is a collection of a storage medium, a processing object, and a management system.

### (3) Thread (thread)

A thread is a minimum unit that an operating system can compute and schedule. The thread is included in a process and is an actual operating unit of the process. One thread is a single-sequence control flow in a process. One process may have a plurality of concurrent threads, and the threads execute different tasks in parallel.

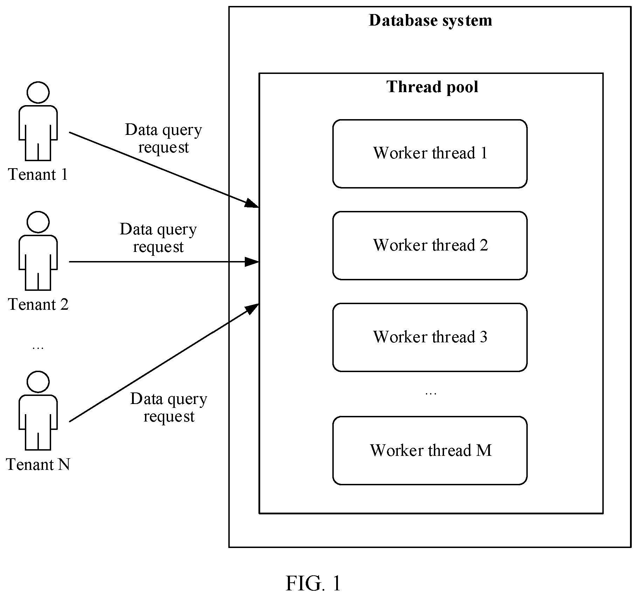

FIG. 1 is a diagram of a structure of a database system in a related technology. As shown in FIG. 1, the database system in the related technology is a database system shared by a plurality of tenants. For example, the database system in FIG. 1 is shared by a tenant 1 to a tenant N. In addition, the database system includes a thread pool, and a plurality of worker threads (that is, a worker thread 1 to a worker thread M in FIG. 1) are pre-constructed in the thread pool.

In a working period of the database system, the tenant sharing the database system may send a data query request to the database system, and the database system randomly allocates the data query request of the tenant to the worker thread in the thread pool for processing. For a data query request sent by a tenant, if a worker thread allocated to process the data query request still has a large quantity of to-be-processed data query requests from another tenant, response time of the data query request sent by the current tenant is long; or if a worker thread allocated to process the data query request currently has no other to-be-processed data query request, response time of the data query request sent by the current tenant is short.

In short, when data query requests of different tenants are centrally processed based on one thread pool, resource contention is prone to occur between different tenants. In other words, data query performance of a tenant may be disturbed by another tenant, causing unstable performance.

In view of this, this embodiment of this application provides a data processing method. A connection processing module is set to obtain a connection request of a user for a database system, and a thread group bound to the user is created for the user based on the connection request, so that each created thread group processes only a data operation request of a specific user, thereby ensuring independence of processing resources between different users and avoiding mutual interference between different users. In addition, a load detection module of the database system can detect a load status of a created thread group, so as to delete some thread groups that have no load for long time, thereby avoiding excessive idle thread groups caused by binding thread groups to the user, and ensuring high resource utilization of the database system.

Specifically, the data processing method provided in this embodiment of this application is applied to a database system. In addition, the database system includes a connection processing module and a load detection module. The connection processing module is configured to: obtain a connection request from a user, and create a corresponding thread group for the user based on the connection request of the user, so that a data operation request subsequently sent by the user can be processed by the thread group corresponding to the user.

For example, the connection processing module may obtain a first connection request from a first user. The first connection request is used to request to establish a connection to the database system, and the first connection request may carry first user identity information of the first user, to indicate the user that sends the first connection request. Then, the connection processing module establishes a connection between the first user and the database system based on the first connection request. In addition, the connection processing module further creates a first thread group based on user identity information in the first connection request (that is, the first user identity information of the first user), and the created first thread group is bound to the first user.

Then, the connection processing module receives a second connection request, where the second connection request carries second user identity information of a second user. The connection processing module creates a second thread group for the second user based on the second user identity information of the second user. The second thread group is bound to the second user, the second thread group includes at least one worker thread, and the second thread group is used to process a data operation request corresponding to the second user. That is, all worker threads in the second thread group are used to process the data operation request from the second user, and do not process a data operation request of another user.

For a thread group created by the connection processing module for any user, the thread group includes at least one worker thread, and the at least one worker thread in the thread group is used to process a data operation request corresponding to the user bound to the thread group. For example, a binding relationship is established between the first thread group and the first user, so that at least one worker thread in the first thread group is used to process a data operation request from the first user, and does not process a data operation request from another user. The data operation request may be, for example, a request for performing an operation like query, write, or deletion on data in a database, which is not specifically limited in embodiments.

In other words, based on the connection processing module, different thread groups may be created in the database system for different users, so that a data operation request of each user for the database may be processed based on a corresponding thread group, thereby effectively avoiding processing resource contention by different users, and ensuring that data query performance of each user is stable. In general, when the connection processing module exists, a thread group of a user does not need to be retained in the database system at any time. When there are a large quantity of users in the database system, a thread group corresponding to the user may be created as required, and a thread group may not be created for a user without a data query service, so that memory and processing resources of the database system can be saved. In addition, compared with forwarding a connection request to a thread group of a user for processing, disposing the connection processing module separately can respond to the connection request of the user more quickly.

In addition, the load detection module continuously runs in the database system. The load detection module is configured to: detect load statuses of created thread groups in the database system, and delete a thread group, where duration in which the thread group continuously has no load exceeds preset duration. In the created thread groups, a plurality of thread groups bound to different user identity information are respectively used to process data operation requests corresponding to different users. That is, for any created thread group in the database system, the created thread group is used to process only a data operation request corresponding to a user bound to the thread group, and does not process a data operation request corresponding to another user.

For example, the load detection module of the database system detects a load status of the first thread group and a load status of the second thread group. If detecting that duration in which a target thread group has no load exceeds target duration, the load detection module deletes the target thread group, where the target thread group is the first thread group or the second thread group.

In other words, if duration in which one thread group continuously has no load exceeds the target duration, it indicates that a user corresponding to the thread group does not access the database for long time. In this case, the load detection module deletes the thread group, to release a resource occupied by the thread group, so as to ensure that the database system has high resource utilization. The target duration may be determined or adjusted based on a resource status of the database system or an actual usage status of the database. For example, the target duration is 5 hours, 10 hours, or 1 day. A specific value of the preset duration is not limited in this embodiment.

Optionally, in the created thread groups in the database system, a processing resource occupied by a thread group bound to a same user is preconfigured. For example, a processing resource occupied by the first thread group and a processing resource occupied by the second thread group are preconfigured. The processing resource configured for the thread group may be determined based on a total processing resource of the database system in an actual scenario and a quantity of users to which the database system is oriented. This is not specifically limited herein.

For example, for each thread group bound to a user, a specific central processing unit (Central Processing Unit, CPU) resource may be preconfigured, so that different thread groups can occupy independent CPU resources. This ensures that CPU isolation can be implemented between different users using the database system, and ensures that each user can have stable database query performance.

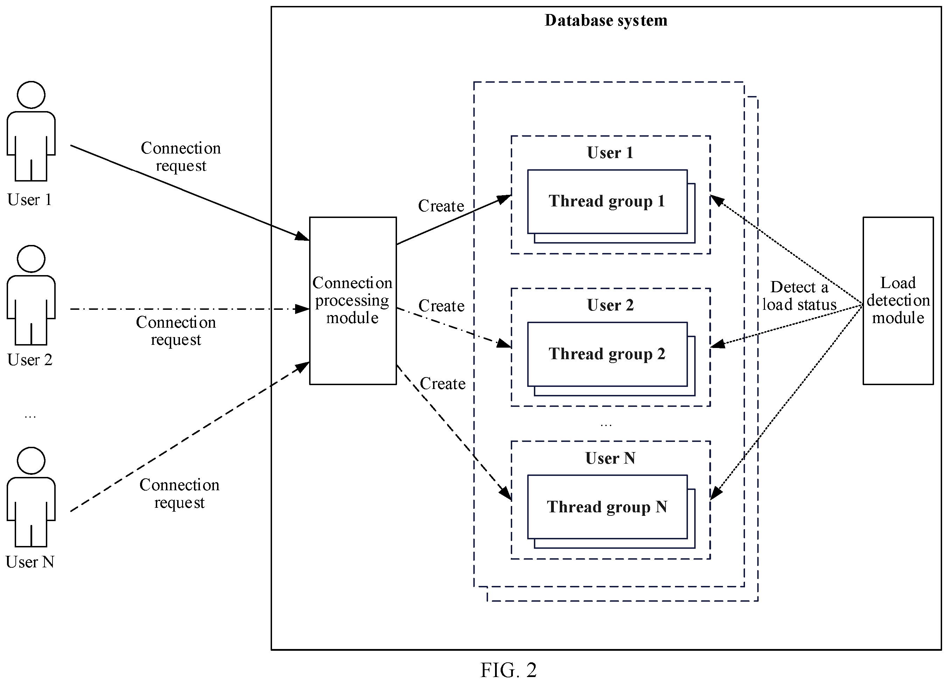

For example, FIG. 2 is a diagram of a structure of a database system according to an embodiment of this application. As shown in FIG. 2, the database system includes a connection processing module, a load detection module, and one or more thread groups corresponding to different users. When the connection processing module obtains connection requests from different users (for example, a user 1 to a user N in FIG. 2), the connection processing module may create a corresponding thread group for each user, and establish a binding relationship between the thread group and user identity information. For example, a binding relationship is established between a thread group 1 and the user 1, a binding relationship is established between a thread group 2 and the user 2, ..., and a binding relationship is established between a thread group N and the user N. In this way, a worker thread in each thread group processes a data operation request from a user bound to the worker thread, thereby ensuring independence between different users and avoiding resource contention. In addition, the load detection module of the database system further periodically detects a load status of each thread group, so as to delete, in a timely manner, some thread groups that have no load for long time, and release resources occupied by these idle thread groups.

Optionally, after the connection processing module obtains the connection request from the user, there may be a plurality of manners for triggering the connection processing module to create a thread group for a user identity corresponding to the connection request.

For example, in a possible implementation, when the connection processing module obtains the foregoing first connection request, if no thread group bound to a first user exists in the database system, the connection processing module may trigger creation of a thread group bound to the first user. That is, when a user requests to establish a connection to the database system, if no thread group corresponding to the user exists in the database system, a new thread group corresponding to the user may be created.

Alternatively, in another possible implementation, when the connection processing module obtains a connection request from a user, if a thread group corresponding to the user has been created in the database, and load of the thread group corresponding to the user is high, the connection processing module may additionally create a new thread group for the user, to cope with a large quantity of data operation requests from the user.

Optionally, when different user equipment can send connection requests to the database system based on same user identity information (for example, different employees in a company log in to the database system by using a same account and password on different devices), the connection processing module may bind a same thread group to different connections of the same user, so that a same thread group can process data operation requests from different connections.

For example, after the connection processing module receives the first connection request and creates the corresponding thread group for the first user corresponding to the first connection request, the connection processing module further receives a third connection request and establishes a connection between the first user and the database system based on the third connection request. User identity information in the third connection request is the same as the user identity information in the first connection request, that is, both are the first user identity information. Because the connection processing module has created the corresponding first thread group for the first user corresponding to the third connection request, the connection processing module may establish a binding relationship between the new connection established based on the third connection request and the first thread group created based on the first connection request. For example, assuming that a connection established by the connection processing module based on the first connection request is a first connection, and the connection established based on the third connection request is a second connection, the first connection and the second connection actually correspond to a same user. Therefore, the thread group created by the connection processing module based on the user identity information corresponding to the first connection request may establish binding relationships with both the first connection and the second connection, so that the thread group can process data operation requests from the first connection and the second connection.

Optionally, to implement that each thread group can accurately process a data operation request of a corresponding user, the database system may further include a listener module. The listener module obtains data operation requests from different users, and transfers the obtained data operation request to a corresponding thread group based on a user corresponding to the obtained data operation request.

In other words, the listener module is actually configured to: listen to connections established between the database system and the users, so as to obtain the data operation requests from the different users; and then transfer, based on a user corresponding to each obtained data operation request, the data operation request to a corresponding thread group, so that each thread group processes a data operation request of a corresponding user. In addition, the listener module is independently disposed outside the thread group to listen to the data operation request, so that the listener module has no binding relationship with the user. In comparison with having a thread group implement data operation request listening, independently disposing the listener module outside the thread group can avoid separately disposing a dedicated listener thread in each thread group, thereby greatly reducing a quantity of threads in the thread group and reducing resource occupation.

For ease of understanding, the following describes in detail specific implementations of the connection processing module, the load detection module, and the listener module with reference to specific examples.

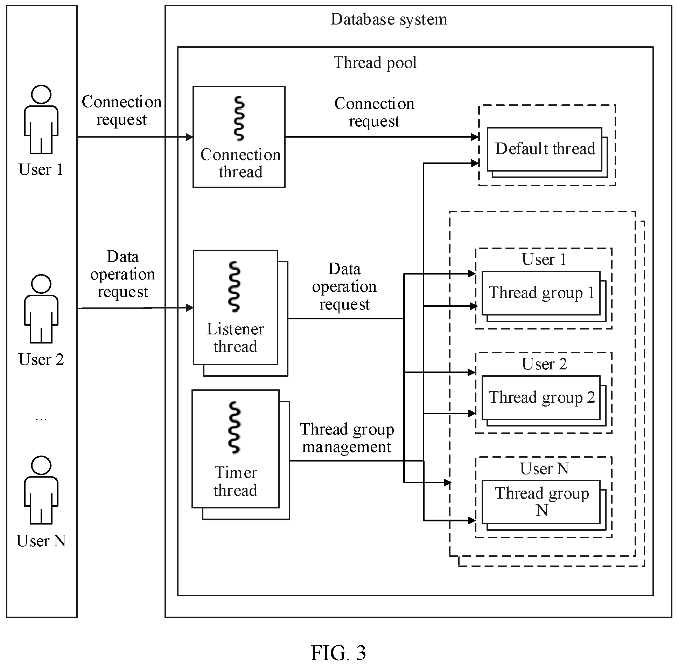

FIG. 3 is a diagram of a structure of another database system according to an embodiment of this application. As shown in FIG. 3, the database system includes a thread pool. Specifically, a thread in the thread pool may be used to implement functions completed by the foregoing connection processing module, load detection module, and listener module.

Specifically, the thread pool may include a connection thread (connection thread), a group of default threads (default threads), a group of listener threads (listener threads), a group of timer threads (timer threads), and a plurality of thread groups (thread groups). One group of default threads includes one or more default threads; one group of listener threads includes one or more listener threads; one group of timer threads includes one or more timer threads; and one thread group includes one or more worker threads. The foregoing connection processing module may be implemented by using a connection thread and a group of default threads; the foregoing load detection module may be implemented by using a group of timer threads; and the foregoing listener module may be implemented by using a group of listener threads. A quantity of default threads, a quantity of listener threads, a quantity of timer threads, and a quantity of worker threads in the thread group may all be automatically configured by the database system, or may be configured by a user based on a usage status of the database system. This is not specifically limited in this embodiment.

The connection thread is used to listen to a service port number of the database system, that is, listen to a connection request from a client used by the user, and forward the obtained connection request to the default thread for processing. When needing to use the database system, the user logs in to the client and sends a connection request to the database system.

The default thread is used to process the connection request from the client to establish a connection between the client used by the user and the database system. In addition, the default thread parses user identity information of the established connection, and binds the established connection to a thread group corresponding to the user to which the established connection belongs. In some possible embodiments, a function of the default thread may alternatively be completed by the worker thread in the thread group. That is, after obtaining the connection request, the connection thread forwards the connection request to a worker thread in any thread group for processing.

The listener thread is used to listen to a data operation request on the established connection between the database system and the client, and forward, based on user identity information in the obtained data operation request, the data operation request to a thread group corresponding to a user to which the data operation request belongs for processing.

The thread group is used to process a data operation request from the user, so as to perform an operation like data query for the user.

The timer thread is used to periodically check a load status of each thread group in the thread pool, and perform elastic scaling of the thread group and elastic scaling of the worker thread in the thread group based on the load status of the thread group.

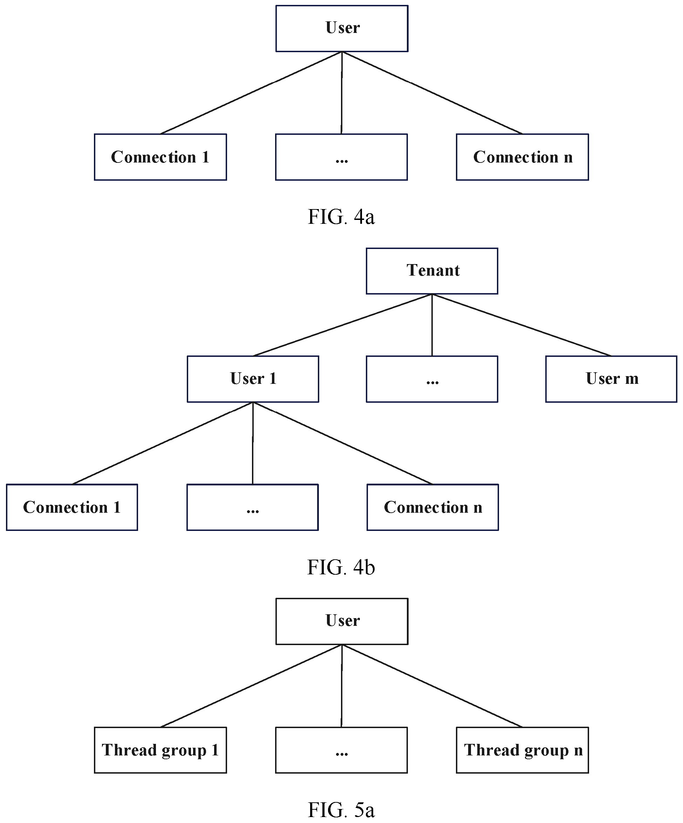

FIG. 4a and FIG. 4b each are a diagram of a relationship between a user and a connection established to a database system according to an embodiment of this application. As shown in FIG. 4a, the database system may allocate a pair of account and password to each user who needs to use the database system, and the user may log in to the database system on different clients by using the account and the password, and establish connections to the database system. For example, a same user separately uses a same pair of account and password to log in to the database system on a smartphone, a personal computer, a notebook computer, and a tablet computer by using clients, and establishes connections to the database system, so that the database system establishes a plurality of connections to the same user. That is, a relationship between a user and a connection may be one-to-one or one-to-many.

As shown in FIG. 4b, the database system may alternatively be leased to some large tenants for use, and these tenants have permission to create and delete a user. That is, a tenant can create one or more pairs of account and password for different users to use, and these users all belong to the same tenant. For example, assuming that a tenant is a company, the company can create different accounts and passwords for different departments, for users in different departments to use. In addition, each user of a same tenant may use an account and a password to log in to the database system on different clients and establish connections to the database system. For example, a same user separately uses a same pair of account and password to log in to the database system on a smartphone, a personal computer, a notebook computer, and a tablet computer by using clients, and establishes connections to the database system, so that the database system establishes a plurality of connections to the same user. That is, a relationship between a tenant and a user is one-to-one or one-to-many, and a relationship between a user and a connection may be one-to-one or one-to-many.

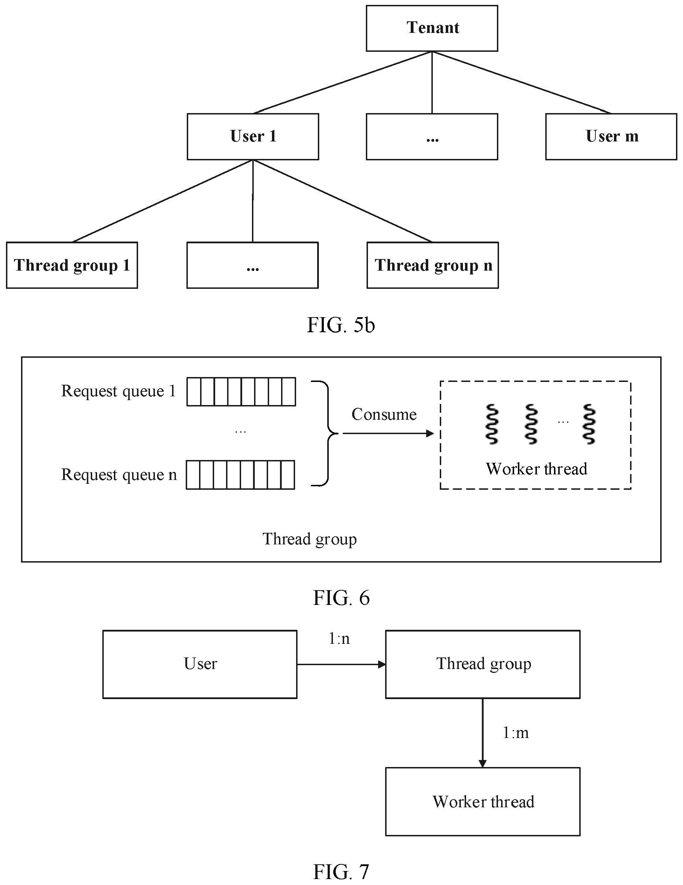

FIG. 5a and FIG. 5b each are a diagram of a relationship between a user and a thread group in a database system according to an embodiment of this application. As shown in FIG. 5a, for a user, the database system may create one or more thread groups for the user, and the one or more thread groups are all bound to the user. For example, in FIG. 5a, one user corresponds to a thread group 1 to a thread group n. Generally, when a user establishes a connection to a database system for a first time, a thread group bound to the user is created. When there are a large quantity of data operation requests of the user, and it is difficult to effectively process the data operation requests of the user based on the existing thread group, a new thread group is additionally created for the user, so that one user may correspond to a plurality of thread groups.

As shown in FIG. 5b, when the database system is leased to some large tenants for use, one tenant may include one or more users, and each user may correspond to one or more thread groups. That is, a relationship between a tenant and a user is one-to-one or one-to-many, and a relationship between a user and a thread group may be one-to-one or one-to-many.

It should be noted that FIG. 4a and FIG. 4b and FIG. 5a and FIG. 5b respectively describe a case in which one user may correspond to a plurality of connections and a case in which one user may correspond to a plurality of thread groups. However, a plurality of connections established between a user and a database system are not necessarily in one-to-one correspondence with a plurality of thread groups corresponding to the user, that is, each thread group corresponding to the user does not uniquely correspond to one connection. The thread group corresponding to the user may correspond to one or more connections established between the user and the database system. For example, three connections may be established between the user and the database system, and a quantity of thread groups corresponding to the user may be 1, that is, one thread group corresponding to the user can be used to process data operation requests obtained from the three connections corresponding to the user. For another example, five connections may be established between the user and the database system, a quantity of thread groups corresponding to the user may be 2, and both the two thread groups corresponding to the user can process a data operation request obtained from any one of the five connections corresponding to the user.

The foregoing describes a relationship between a user and a connection in the database system and a relationship between a user and a thread group. The following describes composition of the thread group in the database system.

Specifically, in the database system, each thread group may include a group of request queues and a group of worker threads. One group of request queues includes at least one request queue, and one group of worker threads includes at least one worker thread. The request queue is used to store a data operation request from a client. The worker thread is a consumer of the request queue and is responsible for obtaining and executing the data operation request from the request queue. There may be a plurality of types of request queues, for example, a queue having a priority or a normal queue having no priority. When data operation requests are processed, a data operation request with a higher priority may be stored in a queue with a higher priority, for preferential processing by the worker thread; and a data operation request with a lower priority may be stored in a queue with a lower priority or a normal queue having no priority.

In addition, in one thread group, a quantity of request queues may be the same as a quantity of worker threads, and each worker thread uniquely corresponds to one request queue. That is, each worker thread obtains a data operation request from a request queue, corresponding to the worker thread, for execution. Optionally, in one thread group, a quantity of request queues may be different from a quantity of worker threads, and each worker thread may obtain a data operation request from any request queue for execution. In conclusion, an implementation of cooperation between the worker thread and the request queue in the thread group is not limited in this embodiment.

For example, FIG. 6 is a diagram of a structure of a thread group according to an embodiment of this application. As shown in FIG. 6, the thread group includes a request queue 1 to a request queue n, and a plurality of worker threads. The plurality of worker threads serve as consumers of data operation requests, and obtain the data operation requests from the request queue 1 to the request queue n for processing. When no data operation request can be processed in the request queue, the worker thread may enter an idle state.

Based on the descriptions of the foregoing embodiments, it may be determined that one tenant corresponds to one or more users in a database system, and one user corresponds to one or more thread groups in the database system. Therefore, a correspondence between a user, a thread group, and a worker thread may be shown in FIG. 7. FIG. 7 is a diagram of a relationship between a user and a thread group in a database system according to an embodiment of this application. In FIG. 7, a correspondence between a user and a thread group is 1:n, that is, one user corresponds to n thread groups, where n is an integer greater than or equal to 1; and a correspondence between a thread group and a worker thread is 1:m, that is, one thread group corresponds to m worker threads, where m is an integer greater than or equal to 1.

For ease of understanding, with reference to the accompanying drawings, the following describes in detail how each thread in the database system establishes a connection for the user and how to process a data operation request sent by the user based on the established connection.

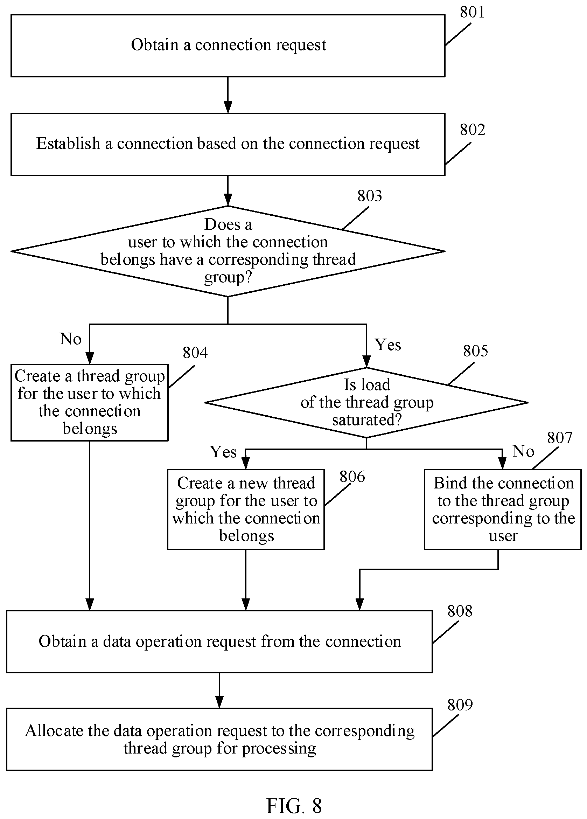

FIG. 8 is a diagram of a working procedure of a database system according to an embodiment of this application. As shown in FIG. 8, a working procedure of each thread in the database system includes the following steps 801 to 809.

Step 801: Obtain a connection request from a user.

In this embodiment, a connection thread in the database system continuously listens to a service port number of the database system, that is, listens to a connection request of each client. After obtaining the connection request sent by the user through the client, the connection thread transfers the obtained connection request to a default thread for processing. When there are a plurality of default threads in the database system, the connection thread may select to transfer the connection request to one of the default threads. There may be a plurality of manners for the connection thread to select the default thread. For example, the connection thread randomly selects one default thread from the plurality of default threads; or the connection thread divides an identifier of the connection request by a quantity of default threads to obtain a remainder, and selects a corresponding default thread based on a value of the remainder.

Optionally, a function of the connection thread may alternatively be completed by a listener thread, that is, the listener thread listens to both the connection request and a data operation request. This is not specifically limited in this embodiment.

Step 802: Establish a connection based on the connection request.

After obtaining the connection request transferred by the connection thread, the default thread may establish, based on the connection request, a connection between the client used by the user and the database system.

Step 803: Determine whether the user to which the connection belongs has a corresponding thread group.

After the default thread successfully establishes a connection, the default thread parses user identity information corresponding to the connection, that is, determines a user to which the created connection belongs. Then, the default thread determines, based on the user identity information corresponding to the connection, whether the user to which the connection belongs has a corresponding thread group in the database system. For example, assuming that the user to which the connection belongs is a user 1, the default thread detects whether a thread group bound to the user 1 exists in the database system.

Step 804: If the user to which the connection belongs has no corresponding thread group, create a thread group for the user to which the connection belongs.

When the user to which the connection belongs has no corresponding thread group, it indicates that the user logs in to the database system for a first time recently. Therefore, the default thread may create a thread group for the user to which the connection belongs and bind the created thread group to the user to which the connection belongs.

Step 805: If the user to which the connection belongs has the corresponding thread group, determine whether load of the thread group corresponding to the user to which the connection belongs is saturated.

When the user to which the connection belongs has no corresponding thread group, because the default thread establishes the new connection for the user, data operation requests of the user may increase. Therefore, the default thread determines whether the load of the thread group corresponding to the user to which the connection belongs is saturated.

Step 806: If the load of the thread group corresponding to the user to which the connection belongs is saturated, create a new thread group for the user to which the connection belongs.

When the load of the thread group corresponding to the user to which the connection belongs is saturated, it indicates that it may be difficult for an existing thread group of the user to cope with subsequent data operation requests with an increasing quantity. Therefore, the default thread creates the new thread group for the user to which the connection belongs.

Step 807: If the load of the thread group corresponding to the user to which the connection belongs is not saturated, bind the connection to the thread group corresponding to the user.

When the load of the thread group corresponding to the user to which the connection belongs is not saturated, the default thread no longer creates a new thread group for the user, but binds the newly established connection to the thread group corresponding to the user, so that a data operation request obtained from the connection can be processed by the thread group corresponding to the user.

Step 808: Obtain the data operation request from the established connection.

After the default thread establishes the connection based on the connection request, the default thread allocates the established connection to the listener thread, and the listener thread listens to the data operation request on the connection. When there are a plurality of listener threads in the database system, the default thread may select to allocate the connection to one of the listener threads. There may be a plurality of manners for the default thread to select the listener thread. For example, the default thread randomly selects one listener thread from the plurality of listener threads; or the default thread divides an identifier of the connection by a quantity of listener threads to obtain a remainder, and selects a corresponding listener thread based on a value of the remainder.

The listener thread is responsible for listening to a data operation request on a connection. When a data operation request is received on the connection, the listener thread forwards, based on a user to which the connection belongs, the data operation request to a thread group corresponding to the user.

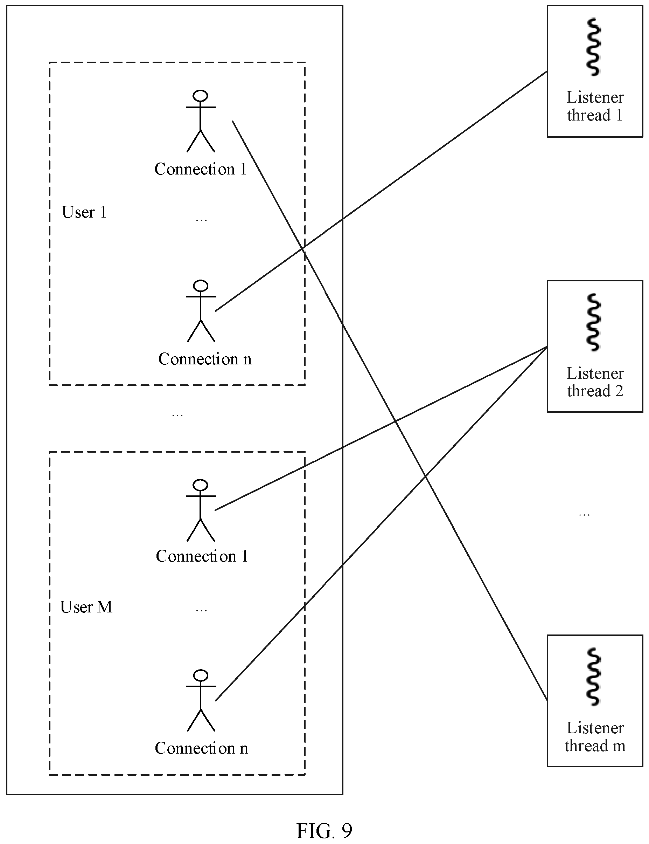

Specifically, there may be a plurality of manners for the listener thread to listen to the data operation request. For example, listening may be implemented by using a common epoll_wait() function. The quantity of listener threads may be configured by the user or automatically configured by the database system. It should be noted that, one connection can correspond to only one listener thread. Conversely, one listener thread may listen to a plurality of connections. Details are shown in FIG. 9. FIG. 9 is a diagram of a correspondence between a connection and a listener thread according to an embodiment of this application. As shown in FIG. 9, each connection established between a user and a database system uniquely corresponds to one listener thread, while one listener thread may listen to a data query request on one or more connections.

Step 809: Allocate the data operation request to the corresponding thread group for processing.

After obtaining the data operation request from the listened connection, the listener thread may allocate, based on the user to which the listened connection belongs, the data operation request to the corresponding thread group for processing, that is, store the data operation request in a request queue of the corresponding thread group.

When the user to which the connection belongs corresponds to a plurality of thread groups, the listener thread may select to allocate the data operation request to one of the thread groups. There may be a plurality of manners for the listener thread to select the thread group. For example, the listener thread randomly selects one listener thread from the plurality of thread groups; or the listener thread obtains a random number, divides the random number by a quantity of thread groups to obtain a remainder, and selects a corresponding thread group based on a value of the remainder.

When the thread group processes the data operation request of the user, a worker thread in the thread group obtains one data operation request from the request queue and processes the data operation request. When no data operation request exists in the request queue in the thread group, the worker thread may enter an idle state.

The foregoing describes a process of how each thread in the database system in this embodiment establishes a connection for the user and processes a data operation request sent by the user based on the established connection. The following describes in detail how a group of timer threads that are in the database system and that are used to implement a load detection module implements elastic scaling of a thread group and elastic scaling of a worker thread in the thread group.

In a working period of the load detection module, the load detection module periodically detects a load status of a created thread group in the database system, and deletes a thread group, where duration in which the thread group continuously has no load exceeds specific duration, so as to release a resource occupied by the idle thread group, thereby ensuring that the database system has high resource utilization.

Optionally, the load detection module of the database system may create, when detecting that average load of a thread group bound to a first user is greater than a first threshold, a new thread group bound to the first user. That is, if average load of one or more thread groups that are currently bound to the first user is high, the load detection module is responsible for creating a new thread group bound to the first user, to relieve processing pressure of the existing thread group and improve processing efficiency of a data operation request corresponding to the first user. This avoids waiting for excessively long time by the user when the user queries for data in a database.

The average load of the thread group may be an average value of load of one or more thread groups. The load of the thread group may be measured by using one or more load indicators, for example, indicators such as a quantity of to-be-processed data operation requests in the request queue in the thread group, an idle status of the request queue in the thread group, a quantity of active worker threads in the thread group, and a size of a processing resource occupied by the thread group. How to determine the load of the thread group is not specifically limited in this embodiment. For example, the load of the thread group is measured by using an idle rate of the request queue in the thread group. In this case, a higher idle rate of the request queue in the thread group indicates lower load of the thread group, and a lower idle rate of the request queue in the thread group indicates higher load of the thread group. When an average idle rate of the request queue in the thread group bound to first user identity information is less than 40%, it indicates that the average load of the thread group is greater than the first threshold, and therefore, a new thread group may be created.

Optionally, when detecting that average load of thread groups bound to the first user is less than a second threshold and a quantity of the thread groups bound to the first user is greater than 1, the load detection module of the database system may further delete a part of the thread groups corresponding to the first user.

In other words, if a user corresponds to a plurality of thread groups, and average load of the plurality of thread groups is not high, it indicates that a data operation request of the user does not need to be processed by excessive thread groups. Therefore, one thread group corresponding to the user may be deleted, to allocate load originally borne by the deleted thread group to other thread groups, thereby improving thread group utilization.

Optionally, in addition to performing elastic scaling on the thread group, the load detection module may further create a new worker thread or delete a part of original worker threads in a single thread group based on a load status of the single thread group in the created thread group. The foregoing first thread group is used as an example. The load detection module may create a new worker thread or delete a part of original worker threads in the first thread group based on a load status of the first thread group.

For example, when average load of a worker thread in the thread group is high, the load detection module may create a new worker thread in the thread group. For another example, when average load of a worker thread in the thread group is low, the load detection module may delete one or more worker threads from the thread group.

In this solution, a load status of the worker thread in the thread group is detected by the load detection module, so as to add a new worker thread or delete a worker thread for the thread group. This can improve resource utilization of the thread group, ensure a quick response to a user request, and save memory resources and processing resources of the database system as much as possible.

It should be noted that, in this embodiment, the load detection module may be implemented by using one or more timer threads. When there are a small quantity of created thread groups in the database system, one timer thread may be used to implement load detection on the thread group. When there are a large quantity of created thread groups in the database system, a plurality of timer threads may be used to implement load detection on the thread group, and each timer thread is responsible for managing a part of the thread groups. For example, based on a quantity of users who have established connections to the database system, thread groups corresponding to the users are evenly allocated to the plurality of timer threads, or thread groups corresponding to active users are evenly allocated to the plurality of timer threads.

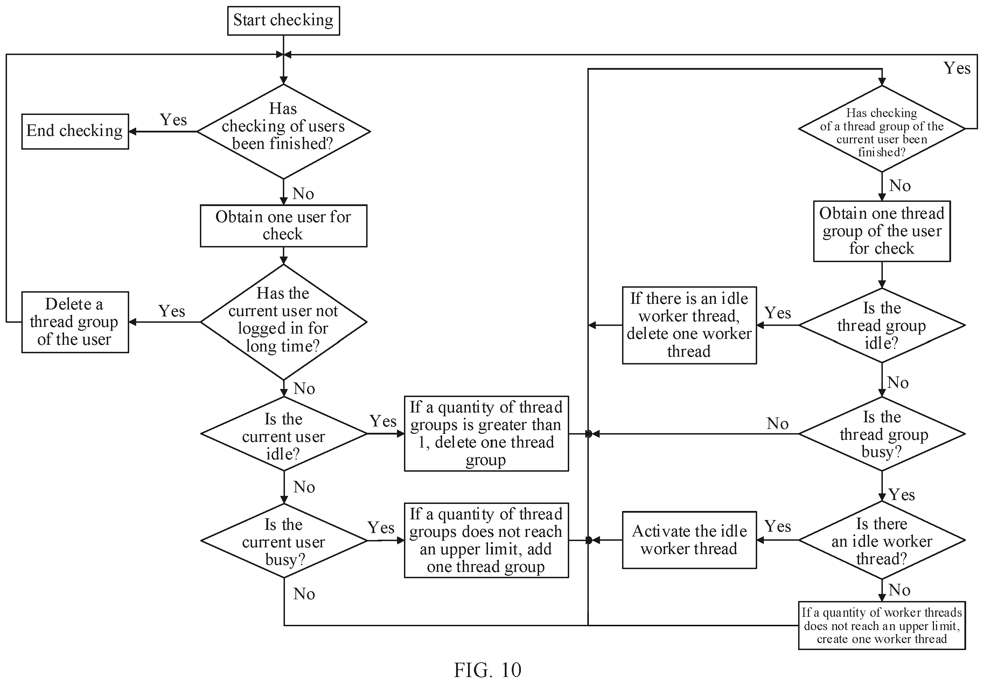

For example, FIG. 10 is a schematic flowchart of checking a thread group by a timer thread according to an embodiment of this application. As shown in FIG. 10, the timer thread periodically and cyclically checks a thread group for which the timer thread is responsible, and a check task mainly includes two aspects. On one hand, a load status of a thread group of each user is checked to implement elastic scaling of a thread group of the same user. On the other hand, a load status of a worker thread in the thread group is checked to implement elastic scaling of the worker thread in the single thread group. In FIG. 10, steps of checking the thread group by the timer thread mainly include the following multiple steps.

Step 1: After the thread group check starts, determine whether checking of all users for which the timer thread is currently responsible has been finished.

If checking of all the users for which the timer thread is currently responsible has been finished, the check ends. If checking of all the users for which the timer thread is currently responsible has not been finished, one user that is not checked is obtained for thread group check.

Step 2: Determine whether the user obtained currently has not logged in for long time.

If a user has not logged in for long time, a thread group corresponding to the user has no load for long time. Therefore, if duration in which a request queue in the thread group corresponding to the user continuously has no load is greater than preset duration, it may be considered that the user has not logged in for long time. When a user has not logged in for long time, the timer thread may delete a thread group corresponding to the user and check a next user.

Step 3: If the user is not a user who has not logged in for a long time, check whether a thread group corresponding to the user is in an idle state.

If the thread group corresponding to the current user has no load (that is, the request queue has no data operation request that needs to be processed), it indicates that the thread group corresponding to the user is in the idle state. In this case, when thread groups corresponding to the user are in the idle state and a quantity of the thread groups corresponding to the user is greater than 1, one thread group corresponding to the user may be deleted, so as to release a memory resource and a processing resource occupied by the idle thread group.

Step 4: When the thread group corresponding to the user is not in the idle state, determine whether the thread group corresponding to the user is busy.

When the thread group corresponding to the user is busy, if a quantity of thread groups corresponding to the user does not reach an upper limit value, a new thread group may be created for the user to reduce load of the existing thread group corresponding to the user. In addition, when thread groups corresponding to the user are not busy, average load of the thread groups corresponding to the user is low, and a quantity of the thread groups corresponding to the user is greater than 1, one thread group corresponding to the user may be deleted.

A manner of determining whether the thread group corresponding to the user is busy may be determined based on one or more load indicators, for example, load indicators such as a quantity of to-be-processed data operation requests in the request queue in the thread group, an idle status of the request queue in the thread group, a quantity of active worker threads in the thread group, and a size of a processing resource occupied by the thread group. An idle rate of the request queue in the thread group is used as an example. When an average idle rate of the request queue in the thread group corresponding to the user is less than 40%, it indicates that the thread group corresponding to the user is busy, and therefore a new thread group may be created for the user. When an average idle rate of the request queue in the thread group corresponding to the user is greater than 80%, it indicates that the thread group corresponding to the user is not busy and has low load, and therefore a corresponding thread group may be deleted for the user. The average idle rate of the request queue in the thread group is obtained by averaging idle rates of all request queues in the thread group. The idle rate of the request queue is a proportion of a quantity of data operation requests currently stored in the request queue in a maximum quantity of requests that can be stored in the request queue.

Step 5: Determine whether checking of the thread group of the current user has been finished.

If checking of the thread group of the current user has been finished, a thread group of another user continues to be checked. If checking of the thread group of the current user has not been finished, one thread group of the current user is obtained for checking.

Step 6: Determine whether the thread group obtained from the current user is in the idle state.

If the thread group obtained from the current user is in the idle state, and an idle worker thread exists in the thread group, one worker thread in the thread group may be deleted until no idle worker thread exists in the thread group. A minimum quantity of worker threads in the thread group may be 0.

Specifically, a manner of determining whether the thread group is in the idle state may be checking whether a request queue in the thread group has a to-be-processed data operation request. If the request queue in the thread group has a to-be-processed data operation request, it indicates that the thread group is not in the idle state; or if the request queue in the thread group has no to-be-processed data operation request, it indicates that the thread group is in the idle state.

Step 7: If the thread group obtained from the current user is not idle, further determine whether the obtained thread group is in a busy state.

Specifically, there may be a plurality of manners for determining whether the thread group is in the busy state, for example, determining whether the thread group is in the busy state by determining an average idle rate of the request queue in the thread group. When the average idle rate of the request queue in the thread group is low, it may be considered that load of the thread group is high, and the thread group is in the busy state. When the average idle rate of the request queue in the thread group is not low, it may be considered that the load of the thread group is low, and the thread group is not in the busy state. For another example, if the request queue in the thread group is not empty, and a new request in the thread group is not completely processed in an interval between two checks of the timer thread, it indicates that the thread group is in the busy state.

Step 8: If the currently obtained thread group is in the busy state, determine whether an idle worker thread exists in the thread group.

If an idle worker thread exists in the thread group, the idle worker thread may be activated, so that more worker threads can be used. If no idle worker thread exists in the thread group, and a quantity of worker threads does not reach an upper limit of the quantity, a new worker thread may be created in the thread group.

It should be noted that an upper limit of a quantity of worker threads in a thread group may be configured by a user or configured by a database system. This is not specifically limited in this embodiment.

It may be understood that, in the check procedure shown in FIG. 10, specifically, a thread group corresponding to each user is first cyclically checked, to determine whether the thread group corresponding to the user needs to be increased or decreased, and then whether a worker thread in each thread group corresponding to the user needs to be increased or decreased is checked. That is, a loop in the check procedure shown in FIG. 10 is nested. In other words, all users are first cyclically checked, and after whether elastic scaling needs to be performed on the thread group of the user is checked, whether elastic scaling needs to be performed on the worker thread in the thread group of the user is checked.

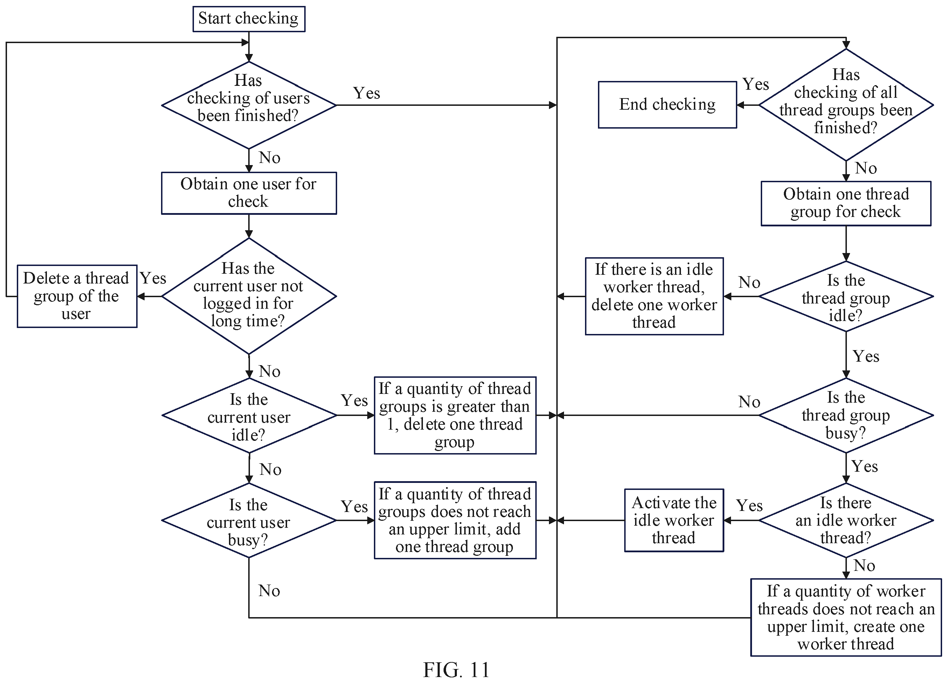

FIG. 11 is another schematic flowchart of checking a thread group by a timer thread according to an embodiment of this application. As shown in FIG. 11, in a possible implementation, the timer thread may alternatively first cyclically check thread groups corresponding to all users, determine whether a thread group corresponding to each user needs to be increased or decreased, and then cyclically check whether a worker thread in each thread group needs to be increased or decreased. That is, in the check procedure of the timer thread, whether elastic scaling needs to be performed on the thread groups of all the users is first checked, and then whether elastic scaling needs to be performed on the worker thread in each thread group is cyclically checked.

The foregoing describes the data processing method and the database system that are provided in embodiments of this application. The following describes a device configured to implement a working procedure of the foregoing database system.

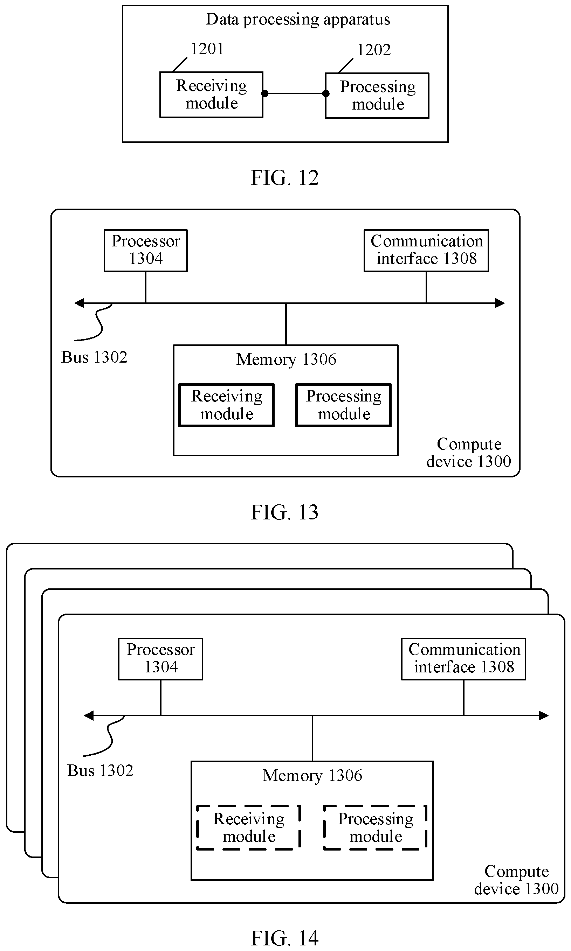

FIG. 12 is a diagram of a structure of a data processing apparatus according to an embodiment of this application. As shown in FIG. 12, the data processing apparatus is used in a database system, and specifically includes: a receiving module 1201, configured to receive a first connection request, where the first connection request carries first user identity information of a first user; and a processing module 1202, configured to create a first thread group for the first user based on the first user identity information of the first user, where the first thread group is bound to the first user, the first thread group includes at least one worker thread, and the first thread group is used to process a data operation request corresponding to the first user. The receiving module 1201 is further configured to receive a second connection request, where the second connection request carries second user identity information of a second user. The processing module 1202 is further configured to create a second thread group for the second user based on the second user identity information of the second user, where the second thread group is bound to the second user, the second thread group includes at least one worker thread, and the second thread group is used to process a data operation request corresponding to the second user. The processing module 1202 is further configured to detect a load status of the first thread group and a load status of the second thread group. If detecting that duration in which a target thread group has no load exceeds target duration, the processing module 1202 is further configured to delete the target thread group, where the target thread group is the first thread group or the second thread group.

In a possible implementation, when the receiving module 1201 receives the first connection request, no thread group bound to the first user exists in the database system.

In a possible implementation, the receiving module 1201 is further configured to receive a third connection request, where the third connection request carries the first user identity information; and the processing module 1202 is further configured to establish a binding relationship between a new connection established based on the third connection request and the first thread group, for the first thread group to process a data operation request from the new connection.

In a possible implementation, the processing module 1202 is further configured to: when detecting that average load of a thread group bound to the first user is greater than a first threshold, create a new thread group bound to the first user.

In a possible implementation, the processing module 1202 is further configured to: when detecting that average load of thread groups bound to the first user is less than a second threshold and a quantity of the thread groups bound to the first user is greater than 1, delete a part of the thread groups bound to the first user.

In a possible implementation, the average load is determined based on any one or more of a plurality of load indicators, and the plurality of load indicators include a quantity of to-be-processed data operation requests in a thread group, a quantity of active worker threads in a thread group, and a size of a processing resource occupied by a thread group.

In a possible implementation, the processing module 1202 is further configured to: create a new worker thread or delete a part of original worker threads in the first thread group based on the load status of the first thread group.

In a possible implementation, the processing module 1202 is further configured to: obtain data operation requests from different users, and transfer the obtained data operation request to a corresponding thread group based on a user corresponding to the obtained data operation request.

In a possible implementation, the first thread group further includes a request queue, the request queue is used to store the data operation requests, and the at least one worker thread in the first thread group is used to obtain the data operation request from the request queue and process the obtained data operation request.

In a possible implementation, a processing resource occupied by the first thread group and a processing resource occupied by the second thread group are preconfigured.

Both the receiving module 1201 and the processing module 1202 may be implemented by software or by hardware. The following uses the processing module 1202 as an example to describe an implementation of the processing module 1202. Similarly, for an implementation of the obtaining module 1201, refer to the implementation of the processing module 1202.

The processing module 1202 is used as an example of a software functional unit, and the processing module 1202 may include code run on a computing instance. The computing instance may include at least one of a physical host (a compute device), a virtual machine, and a container. Further, there may be one or more computing instances. For example, the processing module 1202 may include code run on a plurality of hosts/virtual machines/containers. It should be noted that the plurality of hosts/virtual machines/containers configured to run the code may be distributed in a same region (region) or across different regions. Further, the plurality of hosts/virtual machines/containers configured to run the code may be distributed in a same availability zone (availability zone, AZ) or across different AZs. Each AZ includes one data center or a plurality of data centers with close geographical locations. Usually, one region may include a plurality of AZs.

Similarly, the plurality of hosts/virtual machines/containers configured to run the code may be distributed in a same virtual private cloud (virtual private cloud, VPC) or across a plurality of VPCs. Usually, one VPC is disposed in one region. A communication gateway needs to be disposed in each VPC for communication between two VPCs in a same region and cross-region communication between VPCs in different regions. Interconnection between the VPCs is implemented through the communication gateway.

The processing module 1202 is used as an example of a hardware functional unit, and the processing module 1202 may include at least one compute device like a server. Alternatively, the processing module 1202 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the processing module 1202 may be distributed in a same region or across different regions. The plurality of compute devices included in the processing module 1202 may be distributed in a same AZ or across different AZs. Similarly, the plurality of compute devices included in the processing module 1202 may be distributed in a same VPC or across a plurality of VPCs. The plurality of compute devices may be any combination of compute devices such as a server, an ASIC, a PLD, a CPLD, an FPGA, and GAL.

It should be noted that, content such as information exchange between the modules/units of the foregoing apparatus and an implementation process is based on the same concept as the method embodiment of this application, and produces the same technical effects as those of the method embodiment of this application. For specific content, refer to the foregoing descriptions in the method embodiment of embodiments of this application. Details are not described herein again.

An embodiment of this application further provides a compute device 1300. FIG. 13 is a diagram of a structure of a compute device 1300 according to an embodiment of this application. As shown in FIG. 13, the compute device 1300 includes a bus 1302, a processor 1304, a memory 1306, and a communication interface 1308. The processor 1304, the memory 1306, and the communication interface 1308 communicate with each other through the bus 1302. The compute device 1300 may be a server or a terminal device. It should be understood that quantities of processors and memories in the compute device 1300 are not limited in this application.

The bus 1302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 13, but this does not mean that there is only one bus or only one type of bus. The bus 1302 may include a path for transmitting information between components (for example, the memory 1306, the processor 1304, and the communication interface 1308) of the compute device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The processor 1304 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1306 stores executable program code, and the processor 1304 executes the executable program code to separately implement functions of the receiving module and the processing module, so as to implement the foregoing data processing method. In other words, the memory 1306 stores instructions for performing the data processing method.

The communication interface 1308 implements communication between the compute device 1300 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

FIG. 14 is a diagram of a structure of a compute device cluster according to an embodiment of this application. As shown in FIG. 14, the compute device cluster includes at least one compute device 1300. A memory 1306 in one or more compute devices 1300 in the compute device cluster may store same instructions for performing the data processing method.

In some possible implementations, alternatively, the memory 1306 in the one or more compute devices 1300 in the compute device cluster may separately store a part of instructions for performing the data processing method. In other words, a combination of the one or more compute devices 1300 may jointly execute the instructions for performing the data processing method.

It should be noted that memories 1306 in different compute devices 1300 in the compute device cluster may store different instructions respectively used for performing a part of functions of the data processing apparatus. In other words, the instructions stored in the memories 1306 in the different compute devices 1300 may implement functions of one or more of the receiving module and the processing module.

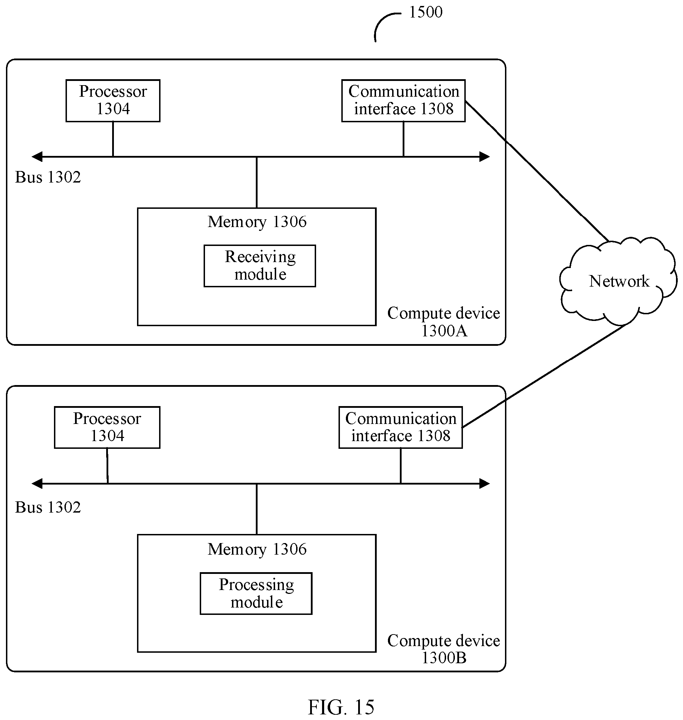

In some possible implementations, the one or more compute devices in the compute device cluster may be connected via a network. The network may be a wide area network, a local area network, or the like. FIG. 15 shows a possible implementation. FIG. 15 is a diagram of a structure of another compute device cluster according to an embodiment of this application. As shown in FIG. 15, in a compute device cluster 1500, two compute devices 1300A and 1300B are connected via a network. Specifically, each compute device is connected to the network through a communication interface in the compute device. In this type of possible implementation, a memory 1306 in the compute device 1300A stores instructions for performing functions of the receiving module. In addition, a memory 1306 in the compute device 1300B stores instructions for performing functions of the processing module.

It should be understood that functions of the compute device 1300A shown in FIG. 15 may alternatively be completed by a plurality of compute devices 1300. Similarly, functions of the compute device 1300B may alternatively be completed by a plurality of compute devices 1300.

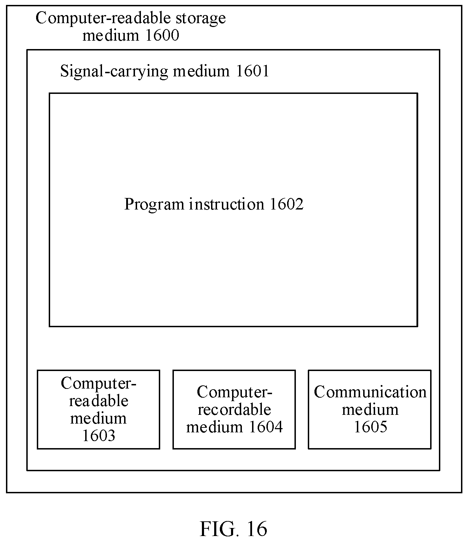

FIG. 16 is a diagram of a structure of a computer-readable storage medium according to an embodiment of this application. This application further provides a computer-readable storage medium. In some embodiments, the working procedure performed by the foregoing database system may be implemented as computer program instructions encoded in a machine-readable format on the computer-readable storage medium or encoded in another non-transitory medium or product.

FIG. 16 shows an example of a conceptual partial view of an example computer-readable storage medium arranged according to at least some embodiments shown herein. The example computer-readable storage medium includes a computer program for executing a computer process on a compute device.

In an embodiment, a computer-readable storage medium 1600 is provided by using a signal-carrying medium 1601. The signal-carrying medium 1601 may include one or more program instructions 1602. When the one or more program instructions 1602 are run by one or more processors, the functions or a part of the functions described above for the foregoing database system may be provided.

In some examples, the signal-carrying medium 1601 may include a computer-readable medium 1603, for example, but not limited to, a hard disk drive, a compact disc (CD), a digital video disc (DVD), a digital tape, a memory, a ROM, or a RAM.

In some implementations, the signal-carrying medium 1601 may include a computer-recordable medium 1604, for example, but not limited to, a memory, a read/write (R/W) CD, and an R/W DVD. In some implementations, the signal-carrying medium 1601 may include a communication medium 1605, for example, but not limited to, a digital and/or analog communication medium (for example, an optical fiber cable, a waveguide, a wired communication link, or a wireless communication link). Therefore, for example, the signal-carrying medium 1601 may be conveyed by a wireless communication medium 1605 (for example, a wireless communication medium that complies with the IEEE 802.X standard or another transmission protocol).

The one or more program instructions 1602 may be, for example, computer-executable instructions or logic implementation instructions. In some examples, a compute device may be configured to provide various operations, functions, or actions in response to the program instructions 1602 conveyed to the compute device by using one or more of the computer-readable medium 1603, the computer-recordable medium 1604, and/or the communication medium 1605.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the data processing method described in the foregoing embodiments.

Based on the description of the foregoing implementations, a person skilled in the art may clearly understand that this application may be implemented by software in addition to necessary universal hardware, or implemented by dedicated hardware, including an application-specific integrated circuit, a dedicated CPU, a dedicated memory, a dedicated component, and the like. Generally, any functions completed by a computer program can be easily implemented by using corresponding hardware. In addition, a specific hardware structure used to implement a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk drive, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When the software is used to implement embodiments, all or a part of embodiments may be implemented in a form of a computer program product.

## Claims

1. A data processing method, wherein the method comprises:
receiving, by a connection processing module of a database system, a first connection request, wherein the first connection request carries first user identity information of a first user;
creating, by the connection processing module, a first thread group for the first user based on the first user identity information of the first user, wherein the first thread group is bound to the first user, the first thread group comprises at least one worker thread, and the first thread group is used to process a data operation request corresponding to the first user;
receiving, by the connection processing module, a second connection request, wherein the second connection request carries second user identity information of a second user;
creating, by the connection processing module, a second thread group for the second user based on the second user identity information of the second user, wherein the second thread group is bound to the second user, the second thread group comprises at least one worker thread, and the second thread group is used to process a data operation request corresponding to the second user;
detecting, by a load detection module of the database system, a load status of the first thread group and a load status of the second thread group; and
if detecting that duration in which a target thread group has no load exceeds target duration, deleting, by the load detection module, the target thread group, wherein the target thread group is the first thread group or the second thread group.

2. The method according to claim 1, wherein when the connection processing module receives the first connection request, no thread group bound to the first user exists in the database system.

3. The method according to claim 1 or 2, wherein the method further comprises:
receiving, by the connection processing module, a third connection request, and establishing a binding relationship between a new connection established based on the third connection request and the first thread group, for the first thread group to process a data operation request from the new connection, wherein the third connection request carries the first user identity information.

4. The method according to any one of claims 1 to 3, wherein the method further comprises:
when the load detection module detects that average load of a thread group bound to the first user is greater than a first threshold, creating a new thread group bound to the first user.

5. The method according to any one of claims 1 to 4, wherein the method further comprises:
when the load detection module detects that average load of thread groups bound to the first user is less than a second threshold and a quantity of the thread groups bound to the first user is greater than 1, deleting a part of the thread groups bound to the first user.

6. The method according to claim 4 or 5, wherein the average load is determined based on any one or more of a plurality of load indicators, and the plurality of load indicators comprise a quantity of to-be-processed data operation requests in a thread group, a quantity of active worker threads in a thread group, and a size of a processing resource occupied by a thread group.

7. The method according to any one of claims 1 to 6, wherein the method further comprises:
creating, by the load detection module, a new worker thread or deleting a part of original worker threads in the first thread group based on the load status of the first thread group.

8. The method according to any one of claims 1 to 7, wherein the method further comprises:
obtaining, by a listener module of the database system, data operation requests from different users, and transferring the obtained data operation request to a corresponding thread group based on a user corresponding to the obtained data operation request.

9. The method according to any one of claims 1 to 8, wherein the first thread group further comprises a request queue, the request queue is used to store the data operation requests, and the at least one worker thread in the first thread group is used to obtain the data operation request from the request queue and process the obtained data operation request.

10. The method according to any one of claims 1 to 9, wherein a processing resource occupied by the first thread group and a processing resource occupied by the second thread group are preconfigured.

11. The method according to any one of claims 1 to 10, wherein both the connection processing module and the load detection module are implemented by one or more threads.

12. A data processing apparatus, wherein the apparatus is used in a database system, and the apparatus comprises:
a receiving module, configured to receive a first connection request, wherein the first connection request carries first user identity information of a first user; and
a processing module, configured to create a first thread group for the first user based on the first user identity information of the first user, wherein the first thread group is bound to the first user, the first thread group comprises at least one worker thread, and the first thread group is used to process a data operation request corresponding to the first user;
the receiving module is further configured to receive a second connection request, wherein the second connection request carries second user identity information of a second user;
the processing module is further configured to create a second thread group for the second user based on the second user identity information of the second user, wherein the second thread group is bound to the second user, the second thread group comprises at least one worker thread, and the second thread group is used to process a data operation request corresponding to the second user;
the processing module is further configured to detect a load status of the first thread group and a load status of the second thread group; and
if detecting that duration in which a target thread group has no load exceeds target duration, the processing module is further configured to delete the target thread group, wherein the target thread group is the first thread group or the second thread group.

13. The apparatus according to claim 12, wherein when the receiving module receives the first connection request, no thread group bound to the first user exists in the database system.

14. The apparatus according to claim 12 or 13, wherein
the receiving module is further configured to receive a third connection request, wherein the third connection request carries the first user identity information; and
the processing module is further configured to establish a binding relationship between a new connection established based on the third connection request and the first thread group, for the first thread group to process a data operation request from the new connection.

15. The apparatus according to any one of claims 12 to 14, wherein
the processing module is further configured to: when detecting that average load of a thread group bound to the first user is greater than a first threshold, create a new thread group bound to the first user.

16. The apparatus according to any one of claims 12 to 15, wherein
the processing module is further configured to: when detecting that average load of thread groups bound to the first user is less than a second threshold and a quantity of the thread groups bound to the first user is greater than 1, delete a part of the thread groups bound to the first user.

17. The apparatus according to claim 15 or 16, wherein the average load is determined based on any one or more of a plurality of load indicators, and the plurality of load indicators comprise a quantity of to-be-processed data operation requests in a thread group, a quantity of active worker threads in a thread group, and a size of a processing resource occupied by a thread group.

18. The apparatus according to any one of claims 12 to 17, wherein
the processing module is further configured to: create a new worker thread or delete a part of original worker threads in the first thread group based on the load status of the first thread group.

19. The apparatus according to any one of claims 12 to 18, wherein
the processing module is further configured to: obtain data operation requests from different users, and transfer the obtained data operation request to a corresponding thread group based on a user corresponding to the obtained data operation request.

20. The apparatus according to any one of claims 12 to 19, wherein the first thread group further comprises a request queue, the request queue is used to store the data operation requests, and the at least one worker thread in the first thread group is used to obtain the data operation request from the request queue and process the obtained data operation request.

21. The apparatus according to any one of claims 12 to 20, wherein a processing resource occupied by the first thread group and a processing resource occupied by the second thread group are preconfigured.

22. A compute device cluster, comprising at least one compute device, wherein each compute device comprises a processor and a memory; and
a processor of the at least one compute device is configured to execute instructions stored in a memory of the at least one compute device, to enable the compute device cluster to perform the method according to any one of claims 1 to 11.

23. A computer program product comprising instructions, wherein when the instructions are run by a computer, the computer is enabled to perform the method according to any one of claims 1 to 11.

24. A computer storage medium, wherein the computer storage medium stores instructions; and when the instructions are run by a computer, the computer is enabled to perform the method according to any one of claims 1 to 11.
